# EUROPEAN PATENT SPECIFICATION

(11) **EP 0 779 090 B1**
(45) Date of publication and mention of the grant of the patent: **22.03.2000**
(21) Application number: 96308637.6
(22) Date of filing: 29.11.1996
(51) Int. Cl.: B01D 35/06, B01D 35/16, B01D 65/02, B01D 65/08, B01D 29/00, B01D 61/42

(54) **In situ filter cleaning**
In-situ-Filterreinigung
In situ nettoyage d'un filtre

(30) Priority: 14.12.1995 GB 9525583
(43) Date of publication of application: 18.06.1997
(73) Proprietor: AEA Technology plc, Didcot, Oxfordshire OX11 0RA (GB)
(72) Inventor: Fennell, Paul Antony Harry, Didcot, Oxfordshire OX11 7PE (GB)
(74) Representative: Mansfield, Peter Turquand

(56) References cited:
- EP-A- 0 474 365
- EP-A- 0 577 026
- WO-A-89/00445
- GB-A- 2 160 545
- GB-A- 2 290 086
- US-A- 4 493 756
- US-A- 4 623 365
- US-A- 5 141 714

## Description

This invention relates to a method of cleaning a filter which incorporates means by which it can be cleaned in situ.

A method for cleaning an electrically-conducting filter is described in GB 2 160 545 B which enables fouling to be removed from the filter in situ. In this method an electrochemical cell is established comprising the filter as a first electrode, a counter electrode, and the process liquid as electrolyte. At intervals during the filtration process a potential difference is applied briefly between the two electrodes, so as to generate at the filter a gaseous product which may be in the form of microbubbles , and which cleans the filter. For example a current of 500-3000 A m⁻² of membrane might be applied for 1-5 seconds periodically between 4-15 times an hour. The potential difference is typically applied such that the filter itself is cathodic, to minimise its corrosion, and the filter may be a metallic microporous membrane, or a conducting ceramic membrane. A similar process is described in EP 0 380 266 A, in which the filter may be a porous layer for example of sintered zirconia incorporating a metal mesh, or may be a porous layer superimposed on such a metal mesh. The counter electrode may be of platinised titanium, or as described in EP 0 474 365 A it may be of low chromium stainless steel. It will be appreciated that during the applications of the cleaning potential difference there is considerable electrical power consumption.

According to the present invention there is provided a method of cleaning a filter assembly in situ during use of the filter assembly to filter a procdess liquid, the filter assembly comprising a filter membrane which is not electrically conducting, a fluid-permeable first electrode, and a fluid-permeable second electrode, the filter membrane being integral with or in contact with one of the electrodes, and wherein the first and the second electrodes are separated from each other and spaced apart from each other by a sheet of fluid-permeable electrically insulating material, the filter assembly also including electric supply means connected to the first and the second electrodes, and the method comprises causing an electric current to flow periodically and briefly between the first and the second electrodes through the process liquid as electrolyte with a current density of at least 500 A/m² so as to generate a gaseous product so that fouling material on the filter membrane is dislodged, at least 75 percent of the brief pulses of current having the same polarity.

The sheet of electrically insulating material ensures that the two electrodes cannot touch each other, and so ensures that electrolysis of the process liquid occurs. The sheet therefore enables the electrodes to be arranged much closer together, and so considerably decreases the electrical power consumption. Furthermore the sheet ensures that the separation of the electrodes is uniform, so ensuring uniform generation of the gaseous product and hence uniform cleaning of the membrane. The sheet may be a single layer of permeable material, for example a nylon mesh, or may be a stack of such layers for example two or three layers of a polyamide cloth with pore sizes up to 18 µm, each of thickness 0.3 mm. The thickness of the sheet, and hence the separation of the electrodes, is preferably between 0.2 mm and 3.0 mm, more preferably less than 1 mm, for example 0.6 mm. Because both electrodes are in such close proximity to the filter membrane, the gas bubbles generated at both electrodes help to remove foulant from the filter membrane.

Filters are known which have some structural similarities to the filter assembly used in the present invention, but their mode of operation is different. For example W089/00445 (Battelle) relates to a filter apparatus in which electrodes are arranged at opposite sides of an insulating filter membrane, at least the electrode at the inlet side being in contact with the membrane. An electric field is applied continuously, at a small current density (e.g. up to 33 A/m²), so that fouling of the filter membrane is prevented. EP-A-0 577 026 (Nagaura) relates to a filter device with permeable electrodes on opposite surfaces of an insulating filter, which is intended for example to trap micro-organisms. A voltage is applied between the electrodes continuously (either as DC or AC). An air filter is described in US-A-4 623 365 (Bergman) in which a filter medium is sandwiched between two air-permeable electrodes to which a high voltage (up to 10 kV DC) is applied. The voltage is used to trap particles, and so is applied continuously.

Where the filter membrane is not integral with an electrode, then the filter membrane may be the insulating sheet, or be one layer of it. The electrodes should be much more readily fluid permeable than the filter membrane, and preferably define pores or perforations at least 0.5 mm across, more preferably at least 1 mm, for example 2 mm or 4 mm across. The insulating sheet, if it isn't the filter membrane, should also have larger pores than the filter membrane, preferably at least five times larger pores, and may have pores or perforations as large as those in electrodes that is to say up to 1 mm, 2 mm or even 4 mm. It is desirable to bond the electrodes to the opposite surfaces of the insulating sheet, and this prevents them separating as a result of gas bubble generation.

The filter membrane may be integral with an electrode, and so may comprise a porous carbon structure, such as a tube, with a zirconia surface coating (suitable for fine microfiltration or ultrafiltration), or a titania coated stainless steel filter (with pore size about 0.2 µm). Alternatively the filter membrane may be in contact with an electrode; in this arrangement a wide variety of different types of membrane can be used. For example the filter membrane might be of polypropylene, nylon, PVdF (polyvinylidenefluoride), polycarbonate, zirconia cloth or other known filter membranes or micro- or ultrafiltration membranes. In these cases the electrode at the filtrate side of the filter membrane is desirably arranged to be cathodic during cleaning pulses, as twice as much gas will be generated at it.

Alternatively the filter membrane may be an electrode, for example it might be a sintered stainless steel microfibre layer (with pore size about 3 µm). Thus in a second aspect the invention provides a method of cleaning a filter assembly in situ during use of the filter assembly to filter a process liquid, the filter assembly comprising a filter membrane which is electrically conducting and acts as a first fluid-permeable electrode, and a fluid-permeable second electrode, wherein the first and the second electrodes are separated from each other and spaced apart by a fluid permeable electrically insulating sheet, the filter assembly also including electric supply means connected to the first and the second electrodes, and the method comprises causing an electric current to flow periodically and briefly between the first and the second electrodes through the process liquid as electrolyte with a current density of at least 500 A/m² so as to generate a gaseous product, so that fouling material on the filter membrane is dislodged, at least 75 percent of the brief pulses of current having the same polarity.

Many of the alternatives discussed above in the context of an insulating filter, are also applicable in this case. The frequency and duration of the pulses of cleaning current clearly depend on how rapidly the membrane becomes fouled, and so on the nature of the liquid being treated. Pulses of current of duration between 1 second and 5 seconds are usually found to be effective, although the duration might be as much as 10 or even 15 seconds. Similarly the frequency might typically be between 4 and 15 times per hour, i.e. at intervals of between 15 and 4 minutes, but if the process liquid contains very little foulant material then cleaning might only be necessary once every hour or two. It should be appreciated that, as described in GB 2 290 086 A, the polarity of the cleaning pulses may be occasionally reversed for example for one pulse in every eight, or that a considerably smaller current may be caused to flow for prolonged periods between the electrodes in the opposite direction to that of the cleaning pulses, this reverse current being at a density no more than 200 A m⁻².

The invention will now be further described by way of example only, and with reference to the accompanying drawings in which:
- Figure 1: shows a diagrammatic sectional view of a filter apparatus; and
- Figure 2: shows a diagrammatic sectional view of an alternative filter apparatus.

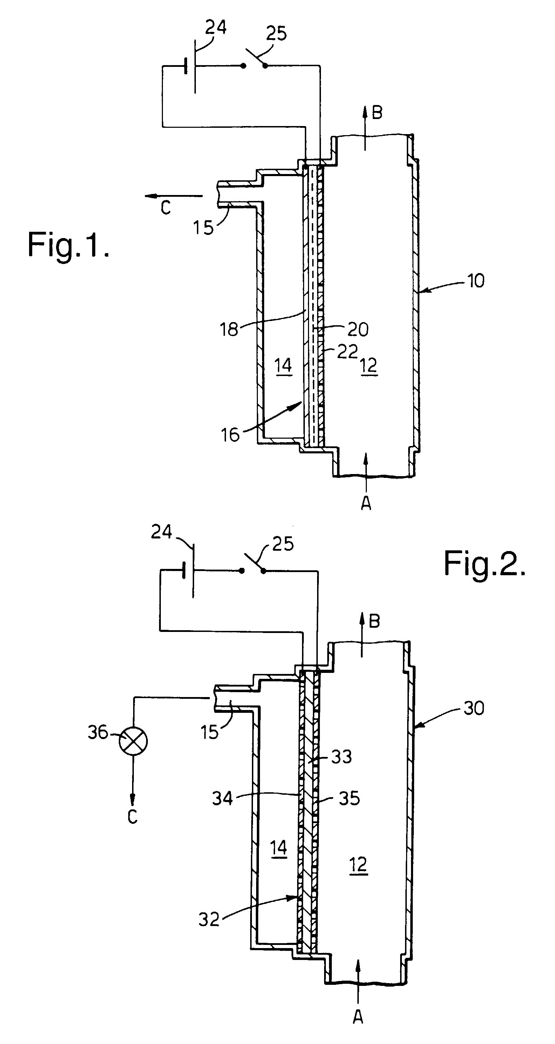

Referring to Figure 1 there is shown a filter apparatus 10 comprising a treatment chamber 12 through which a liquid or a slurry to be treated is caused to flow, the liquid (or slurry) entering as indicated by arrow A and leaving the chamber 12 as indicated by arrow B. A filtrate chamber 14 is separated from the chamber 12 by a filter assembly 16 through which a filtrate liquid permeates, and the filtrate liquid can leave the filtrate chamber 14 as indicated by arrow C through an outlet duct 15.

The filter assembly 16 includes a stainless steel microfibre filter layer 18 which has pore sizes about 3 µm. The surface of the layer 18 facing the treatment chamber 12 is covered by a coarse woven nylon mesh 20 about 0.5 mm thick and with holes about 2 mm wide, which is itself covered by perforated counter electrode 22 of 9% chromium stainless steel with 2 mm wide diamond-shaped apertures. The filter layer 18 and the counter-electrode 22 are connected to a source 24 of electric current and a switch 25.

In operation of the filter apparatus 10 a liquid to be treated is pumped through the chamber 14 and as a result of the pressure drop across the filter assembly 16 a filtrate liquid permeates into the chamber 14 to emerge through the duct 15. The filtrate flux gradually decreases due to build-up of foulant on the surface of the filter layer 18. At periodic intervals, for example once every 20 minutes, the power supply 24 is connected briefly to the filter layer 18 and the counter electrode 22 for say 5 seconds, so the current density at the surface of the layer 18 is 600 A m⁻². Electrolysis of the liquid results in the generation of microbubbles of gas at both the filter layer 18 and the counter electrode 22 which disrupt the foulant and dislodge it. This considerably improves the filtrate flux. During the application of the current pulse it is desirable to also decrease the pressure drop across the filter assembly 16, which may be achieved by closing or obstructing the outlet duct 15.

Referring now to Figure 2 there is shown an alternative filter apparatus 30 which has many features in common with the apparatus 10 of Figure 1, comprising a treatment chamber 12 and a filtrate chamber 14 which are separated by a filter assembly 32. The filter assembly 32 comprises a woven polypropylene cloth filter membrane 33 sandwiched between and thermally bonded to a stainless steel wire gauze 34 on the filtrate side, and a 9% chromium stainless steel perforated plate 35 on the treatment chamber 12 side. The membrane 33 has pore sizes of about 3 µm, while the gauze 34 has 1 mm apertures, and the perforated plate 35 has 2.5 mm apertures. The gauze 34 and the plate 35 are connected to a switch 25 and an electric power supply 24 such that the gauze 34 is the cathode.

In operation of the filter apparatus 30 the liquid or slurry to be treated is pumped through the chamber 12, and filtrate emerges through the filter assembly 32 into the chamber 14. A valve 36 enables the outflow C of filtrate from the apparatus 30 to be controlled. Foulant will gradually build up on the filter membrane 33, and at periodic intervals the power supply 24 is switched on for say 5 or 10 seconds, at a current density at the gauze 34 and the plate 35 of 600 A m⁻², At the same time the valve 36 is closed. Microbubbles are generated by electrolysis at both the gauze 34 and the plate 35, and so gas bubbles pass through the membrane 33 towards the chamber 12 (because the valve 36 is closed), dislodging and removing the foulant. This considerably improves the filtrate flux when the valve 36 is reopened and the power supply 24 switched off.

It will be appreciated that a wide variety of different filter membranes may be used in place of the woven polypropylene cloth membrane 33 in the apparatus 30, being chosen in accordance with the nature of the liquid to be treated, and the type of filtration required. For example the membrane 33 might be replaced by a PVdF membrane with pore sizes about 0.45 µm if microfiltration is required. The membrane 33 might be replaced by a fine woven zirconia cloth, with pore sizes less than 1 µm, if chemically aggressive (e.g. alkaline) or high temperature liquids are to be filtered; in this case the electrodes 34, 35 would be spot-glued to the membrane. Thus the membrane may be one intended for ultrafiltration (with pore sizes typically less than about 0.03 µm), or one intended for microfiltration (with pore sizes between about 0.1 µm and 5 µm), or for conventional filtration (with pore sizes larger than about 5 µm).

It will also be appreciated that the shape of the filter membrane may differ from the flat sheet shown in the drawings, and that the filter membrane might instead be a cylindrical tube, or might be a spiral. For example a polycarbonate filter membrane sandwiched between a flexible stainless steel wire gauze and a flexible platinised titanium wire gauze may be sandwiched between coarse nylon mesh spacer meshes and then wound into a spiral filter assembly along with an impermeable plastic sheet.

## Claims

1. A method of cleaning a filter assembly (30) in situ during use of the filter assembly (30) to filter a process liquid, the filter assembly (30) comprising a filter membrane (33) which is not electrically conducting, a fluid-permeable first electrode (34), and a fluid-permeable second electrode (35), the filter membrane (33) being integral with or in contact with one of the electrodes (34), and wherein the first and the second electrodes (34, 35) are separated from each other and spaced apart from each other by a sheet of fluid-permeable electrically insulating material (33), the filter assembly (30) also including electric supply means (24) connected to the first and the second electrodes (34, 35), and the method comprises causing an electric current to flow periodically and briefly between the first and the second electrodes (34, 35) through the process liquid as electrolyte with a current density of at least 500 A/m² so as to generate a gaseous product so that fouling material on the filter membrane (33) is dislodged, at least 75 percent of the brief pulses of current having the same polarity.

2. A method as claimed in claim 1 wherein the thickness of insulating material (33) separating the first and the second electrodes (34, 35) is between 0.2 mm and 3.0 mm.

3. A method as claimed in claim 1 or claim 2 wherein the filter membrane (33) is a layer of the insulating sheet.

4. A method as claimed in any one of the preceding claims wherein the filter membrane (33) is selected from the group consisting of polypropylene, nylon, polyvinylidene fluoride, polycarbonate, and zirconia cloth.

5. A method as claimed in any one of the preceding claims wherein the electrodes (34, 35) define pores or perforations at least 0.5 mm across.

6. A method as claimed in claim 5 wherein at least one of the electrodes (35) defines perforations between 2 mm and 4 mm across.

7. A method of cleaning a filter assembly (10) in situ during use of the filter assembly (10) to filter a process liquid, the filter assembly (10) comprising a filter membrane (18) which is electrically conducting and acts as a first fluid-permeable electrode, and a fluid-permeable second electrode (22), wherein the first and the second electrodes (18, 22) are separated from each other and spaced apart by a fluid-permeable electrically insulating sheet (20), the filter assembly (10) also including electric supply means (24) connected to the first and the second electrodes (18, 22), and the method comprises causing an electric current to flow periodically and briefly between the first and the second electrodes (18, 22) through the process liquid as electrolyte with a current density of at least 500 A/m² so as to generate a gaseous product, so that fouling material on the filter membrane is dislodged, at least 75 percent of the brief pulses of current having the same polarity.

8. A method as claimed in claim 7 wherein the insulating sheet (20) is a single layer (20) of fluid-permeable material.

9. A method as claimed in claim 7 or claim 8 wherein the thickness of the sheet (20) is between 0.2 mm and 3.0 mm.

10. A method as claimed in any one of claims 7 to 9 wherein the sheet (20) defines perforations about 2 mm across.

11. A method as claimed in any one of claims 7 to 10 wherein the second electrode (22) defines pores or perforations at least 0.5 mm across.

12. A method as claimed in claim 11 wherein the second electrode (22) defines perforations between 2 mm and 4 mm across.

13. A method as claimed in any one of the preceding claims including the step of reducing the pressure difference across the filter membrane (33, 18) to zero or to negative values while the current is flowing.

## Patentansprüche

1. Verfahren zur In-situ-Reinigung eines Filteraufbaus (30) während der Verwendung des Filteraufbaus (30) zum Filtern einer Prozessflüssigkeit, welcher Filteraufbau (30) eine Filtermembran (33), die nicht elektrisch leitend ist, eine fluiddurchlässige erste Elektrode (34) sowie eine fluiddurchlässige zweite Elektrode (35) umfasst, wobei die Filtermembran (33) einstückig mit oder in Berührung mit einer der Elektroden (34) ausgebildet ist und wobei die erste und die zweite Elektrode (34, 35) durch eine Lage aus einem fluiddurchlässigen, elektrisch isolierenden Material (33) voneinander getrennt sind und zueinander beabstandet sind, wobei der Filteraufbau (30) auch ein elektrisches Versorgungsmittel (24) umfasst, das mit der ersten und der zweiten Elektrode (34, 35) verbunden ist, und welches Verfahren den Schritt umfasst, dass man einen elektrischen Strom periodisch und kurzzeitig mit einer Stromdichte von zumindest 500 A/m² zwischen der ersten und der zweiten Elektrode (34, 35) durch die Prozessflüssigkeit fliessen lässt, um so ein gasförmiges Produkt zu erzeugen, so dass ein Ablagerungsmaterial auf der Filtermembran (33) abgelöst bzw. entfernt wird, wobei zumindest 75% der kurzen Stromimpulse dieselbe Polarität aufweisen.

2. Verfahren nach Anspruch 1, bei dem die Dicke des isolierenden Materials (33), das die erste und die zweite Elektrode (34, 35) trennt, zwischen 0,2 mm und 3,0 mm liegt.

3. Verfahren nach Anspruch 1 oder Anspruch 2, bei dem es sich bei der Filtermembran (33) um eine Schicht der isolierenden Lage handelt.

4. Verfahren nach einem der vorhergehenden Ansprüche, bei dem die Filtermembran (33) aus einem Gewebe aus Polypropylen, aus Nylon, aus Polyvinylidenfluorid, aus Polykarbonat oder aus Zirkondioxid besteht.

5. Verfahren nach einem der vorhergehenden Ansprüche, bei dem die Elektroden (34, 35) Poren oder Perforationen mit einem Durchmesser von zumindest 0,5 mm definieren.

6. Verfahren nach Anspruch 5, bei dem zumindest eine der Elektroden (35) Perforationen mit einem Durchmesser zwischen 2 mm und 4 mm definiert.

7. Verfahren zur In-situ-Reinigung eines Filteraufbaus (10) während der Verwendung des Filteraufbaus (10) zum Filtern einer Prozessflüssigkeit, welcher Filteraufbau (10) eine Filtermembran (18) umfasst, die elektrisch leitend ist und als erste fluiddurchlässige Elektrode dient, sowie eine fluiddurchlässige zweite Elektrode (22), wobei die erste und die zweite Elektrode (18, 22) durch eine fluiddurchlässige, elektrisch isolierende Lage (20) voneinander getrennt sind und zueinander beabstandet sind, welcher Filteraufbau (10) auch ein elektrisches Versorgungsmittel (24) umfasst, das mit der ersten und der zweiten Elektrode (18, 22) verbunden ist, und welches Verfahren den Schritt umfasst, dass man einen elektrischen Strom periodisch und kurzzeitig mit einer Stromdichte von zumindest 500 A/m² zwischen der ersten und der zweiten Elektrode (18, 22) durch die Prozessflüssigkeit fließen lässt, um so ein gasförmiges Produkt zu erzeugen, so dass ein Ablagerungsmaterial auf der Filtermembran abgelöst bzw. entfernt wird, wobei zumindest 75 % der kurzen Stromimpulse dieselbe Polarität aufweisen.

8. Verfahren nach Anspruch 7, bei dem es sich bei der isolierenden Lage (20) um eine Einzelschicht (20) aus einem fluiddurchlässigen Material handelt.

9. Verfahren nach Anspruch 7 oder Anspruch 8, bei dem die Dicke der Lage (20) zwischen 0,2 mm und 3,0 mm liegt.

10. Verfahren nach einem der Ansprüche 7 bis 9, bei dem die Lage (20) Perforationen mit einem Durchmesser von etwa 2 mm definiert.

11. Verfahren nach einem der Ansprüche 7 bis 10, bei dem die zweite Elektrode (22) Poren oder Perforationen mit einem Durchmesser von zumindest 0,5 mm definiert.

12. Verfahren nach Anspruch 11, bei dem die zweite Elektrode (22) Perforationen mit einem Durchmesser zwischen 2 mm und 4 mm definiert.

13. Verfahren nach einem der vorhergehenden Ansprüche, das den Schritt umfasst, dass die Druckdifferenz über die Filtermembran (33, 18) auf Null oder auf negative Werte reduziert wird, während der Strom fließt.

## Revendications

1. Procédé de nettoyage in situ d'un ensemble filtrant (30) pendant l'utilisation de l'ensemble filtrant (30) pour filtrer un liquide de traitement, l'ensemble filtrant (30) comportant une membrane filtrante (33) qui n'est pas électriquement conductrice, une première électrode (34) perméable au fluide, et une seconde électrode (35) perméable au fluide, la membrane filtrante (33) étant venue de matière avec une des électrodes (34), ou est en contact avec celle-ci, et dans lequel les première et seconde électrodes (34, 35) sont séparées l'une de l'autre et espacées l'une de l'autre par une feuille de matériau électriquement isolant (33) perméable au fluide, l'ensemble filtrant (30) incluant également des moyens d'alimentation électrique (24) connectés aux première et seconde électrodes (34, 35), et le procédé comporte l'étape consistant à faire circuler un courant électrique périodiquement et brièvement entre les première et seconde électrodes (34, 35) à travers le liquide de traitement en tant qu'électrolyte avec une densité de courant d'au moins 500 A/m² de manière à générer un produit gazeux de sorte que le matériau d'encrassement sur la membrane filtrante (33) est délogé, au moins 75 % des brèves impulsions de courant ayant la même polarité.

2. Procédé selon la revendication 1, dans lequel l'épaisseur du matériau isolant (33) séparant les première et seconde électrodes (34, 35) est comprise entre 0,2 mm et 3,0 mm.

3. Procédé selon la revendication 1 ou 2, dans lequel la membrane filtrante (33) est une couche de la feuille isolante.

4. Procédé selon l'une quelconque des revendications précédentes, dans lequel la membrane filtrante (33) est sélectionnée parmi le groupe constitué de polypropylène, de Nylon, de fluorure de polyvinylidène, de polycarbonate et d'un tissu de zircone.

5. Procédé selon l'une quelconque des revendications précédentes, dans lequel les électrodes (34, 35) définissent des pores ou des perforations d'au moins 0,5 mm de largeur.

6. Procédé selon la revendication 5, dans lequel au moins une des électrodes (35) définit des perforations entre 2 mm et 4 mm de largeur.

7. Procédé de nettoyage in situ d'un ensemble filtrant (10) pendant l'utilisation de l'ensemble filtrant (10) pour filtrer un liquide de traitement, l'ensemble filtrant (10) comportant une membrane filtrante (18) qui est électriquement conductrice et qui agit en tant que première électrode perméable au fluide, et une seconde électrode (22) perméable au fluide, dans lequel les première et seconde électrodes (18, 22) sont séparées l'une de l'autre et espacées par une feuille électriquement isolante (20) perméable au fluide, l'ensemble filtrant (10) incluant également des moyens d'alimentation électrique (24) connectés aux première et seconde électrodes (18, 22), et le procédé comporte l'étape consistant à faire circuler un courant électrique périodiquement et brièvement entre les première et seconde électrodes (18, 22) à travers le liquide de traitement en tant qu'électrolyte avec une densité de courant d'au moins 500 A/m² de manière à générer un produit gazeux, de sorte que le matériau d'encrassement sur la membrane filtrante est délogé, au moins 75 % des brèves impulsions de courant ayant la même polarité.

8. Procédé selon la revendication 7, dans lequel la feuille isolante (20) est une couche unique (20) d'un matériau perméable au fluide.

9. Procédé selon la revendication 7 ou 8, dans lequel l'épaisseur de la feuille (20) est comprise entre 0,2 mm et 3,0 mm.

10. Procédé selon l'une quelconque des revendications 7 à 9, dans lequel la feuille (20) définit des perforations d'environ 2 mm de largeur.

11. Procédé selon l'une quelconque des revendications 7 à 10, dans lequel la seconde électrode (22) définit des pores ou des perforations d'au moins 0,5 mm de largeur.

12. Procédé selon la revendication 11, dans lequel la seconde électrode (22) définit des perforations comprises entre 2 mm et 4 mm de largeur.

13. Procédé selon l'une quelconque des revendications précédentes, incluant l'étape consistant à réduire la différence de pression entre la membrane filtrante (33, 18) jusqu'à zéro ou des valeurs négatives pendant que le courant circule.
